# EUROPEAN PATENT APPLICATION

(11) **EP 4 485 310 A1**
(43) Date of publication of application: **01.01.2025**
(21) Application number: 23181845.1
(22) Date of filing: 27.06.2023
(51) Int. Cl.: G06Q 10/10, G06Q 40/08, G06Q 50/30

(54) **METHOD AND SYSTEM FOR OBJECTIVE ASSESSMENT OF WINDSHIELD DAMAGE USING DIGITAL IMAGERY AND ARTIFICIAL INTELLIGENCE**

(71) Applicant: Fiasco GmbH, 71394 Kernen im Remstal (DE)
(72) Inventor: Coskun, Serpil, 71394 Kernen im Remstal (DE); Aslan, Önder, 71394 Kernen im Remstal (DE)
(74) Representative: Mzb PartmbB

(57) **Abstract**

The present invention pertains to the technical field of vehicular damage assessment, particularly to an innovative method for evaluating windshield damage in automobiles. The method employs digital imagery analysis, preferably augmented by artificial intelligence, to discern the nature and location of damage on a car's windshield. The innovation ensures consistency and objectivity in assessment by using a distinct marker placed on the windshield, captured in multiple views, serving as a reference for the evaluation. The invention further integrates an enhanced validation step to prevent fraudulent manipulations. Moreover, the system can make an informed recommendation on whether repair or replacement is advisable based on the vehicle's specifics and damage extent. With its wide-ranging industrial applicability, this invention significantly improves the efficiency and reliability of processes in sectors such as auto insurance, car repair, and leasing services.

## Description

### Technical Field

The invention relates to the process and products as per the prior art portion of the independent claims.

### Background Art

The examination and evaluation of automobile windshield damages constitutes a crucial element in automotive repair processes, insurance claims management, and road safety considerations. The traditional approach to such assessments has largely relied on manual inspections conducted by trained professionals, a process that may involve inherent subjectivity and inconsistencies between different evaluators.

Generally, in the field of automotive repair and maintenance, assessment of windshield damage involves an evaluator visually examining the windshield to determine the type and extent of the damage. This evaluation may be subjective and vary considerably depending on the evaluator's expertise, experience, and interpretation. Further, this evaluation process requires the physical presence of the evaluator at the location of the vehicle, which may present logistical challenges and lead to delays in repair decisions and insurance claim processing.

Typically, the nature of windshield damages can vary widely, ranging from minor stone chipping, often caused by the impact of small debris on the windshield, to extensive cracks that could severely impact the structural integrity of the windshield. Each type of damage may require a different course of remedial action. For instance, minor stone chipping may be repairable, depending on its size and location, while extensive cracks usually necessitate the complete replacement of the windshield. Evaluators determine the repairability of a windshield by considering factors such as the size, depth, type, and location of the damage, in relation to the total windshield area.

Although technologies have been developed to digitize and automate aspects of the vehicle damage assessment process, these technologies have primarily focused on the analysis of vehicle body damages. The automated evaluation of windshield damages remains a largely unaddressed aspect within this technological progression, and the methods currently available for this purpose are few and not widely adopted.

### Summary of Invention

The invention is set out in the appended set of claims.

### Technical Problem

The state of the art in assessing windshield damage in automobiles suffers from several drawbacks that serve as impetuses for technological innovation in this sphere. The prevalent reliance on manual inspections introduces inherent subjectivity and variability into the assessment process, with potentially significant implications for the accuracy, consistency, and reliability of damage evaluations. These implications can directly impact critical areas such as repair decisions, insurance claim determinations, and road safety considerations.

A significant technical challenge in this context lies in the standardization of the windshield damage assessment process. Traditional methods can vary widely in their execution, with different evaluators potentially employing divergent approaches to damage identification, characterization, and location determination. This variability introduces a degree of uncertainty and unpredictability in the assessment results, posing a significant problem in ensuring the objectivity and reproducibility of the assessments.

Another salient problem is the logistical constraint imposed by the requirement for a physical inspection by a trained evaluator. This requirement necessitates the presence of the evaluator at the vehicle's location, introducing logistical complexities, potential delays, and increased costs into the process.

Existing methods of photo or video documentation of body damages have proven inappropriate for vehicle glass due to its reflective and translucent properties, which often cause difficulty in obtaining a clear, detailed image. A camera's light sensors might misinterpret or fail to pick up the delicate nuances of scratches, cracks, or chips due to reflections, refractions, or even transparent areas. Additionally, subtle damage on glass might require specific angles or lighting conditions to be adequately visible. These difficulties are amplified when using standard digital cameras or smartphone cameras, which may not have the advanced imaging technologies needed to capture minute details on an otherwise transparent surface. Furthermore, the focus might be thrown off if the glass is part of a more complex scene with multiple depths, such as a car, or if the background seen through the glass, such as the car's interior, interferes with the camera's autofocus capabilities.

### Solution to Problem

As shall be further elucidated in the following description, this problem is solved as per the characterizing portion of the independent claims.

### Advantageous Effects of Invention

The invention, as characterized in the claims, addresses the technical problem and overcomes the limitations associated with conventional methods of assessing windshield damage, thereby introducing an array of advantageous effects.

The method, founded on the use of a digital platform for capturing and analyzing imagery of windshield damage, provides a standardization that mitigates variability and human subjectivity. By facilitating a systematic process for capturing imagery, comprising a full view of the windshield and a closeup view of the damage, the method enhances the precision and reliability of assessments.

With the utilization of a server, preferably equipped with artificial intelligence, the invention permits a two-fold analysis: a first analysis determining the type of damage, and a second analysis determining the location of the damage relative to the windshield. This two-step approach allows for an objective assessment of the damage based on visual information captured by the digital platform. The result is a substantial improvement in the reliability and consistency of damage assessments, which ultimately impacts the quality of repair or replacement decisions.

Moreover, the inclusion of a manual tagging process, wherein the damage is marked using a sticker with a predefined design, further increases the precision of the damage evaluation. The sticker provides a defined image background and size reference for the analysis, aiding the artificial intelligence in accurately discerning the type and extent of the damage.

The invention's provision for the capture of continuous video imagery introduces an added layer of security, reducing the risk of fraudulent manipulation and ensuring that the identity and immobility of the sticker are verifiable between views. This aspect considerably heightens the trustworthiness and validity of the evaluation.

A unique strength of the method lies in its ability to consider vehicle-specific parameters. By allowing the capture and analysis of additional images, such as a full view of the car or its registration document, the method enables the identification of the car model. This facilitates the possibility to base the damage assessment on model-specific information, further enhancing the accuracy and comprehensiveness of the evaluation.

Lastly, the method's potential to advise towards repair or replacement of the windshield depending on established mileage and assessed damage introduces a level of intelligence not found in conventional approaches. This not only furthers the precision of the evaluation but also brings forth added value for subsequent decision-making processes.

In essence, the method paves the way towards a standardized, objective, and reliable way of assessing windshield damages. By harnessing the power of advanced technologies such as artificial intelligence, and integrating vehicle-specific data, it ushers in a new era of precise, comprehensive, and trustworthy windshield damage assessment.

### Description of Embodiments

The present invention may be implemented in a variety of ways. The following describes exemplary embodiments, to provide those skilled in the art with a clear understanding of how to perform the inventive method.

The method starts with capturing the imagery of a car's windshield, specifically of the area with the damage. This can be performed using a mobile client, such as a smartphone or tablet, equipped with a camera and the necessary software application. This software can be a native mobile application or a web-based application accessible via a web browser on the mobile client. The mobile client must have network connectivity, such as Wi-Fi or cellular data, to facilitate the uploading of the captured imagery to a server.

Prior to capturing the imagery, a workshop employee or another user applies a sticker on the inside of the windshield at the location of the damage. The sticker should be opaque and front-facing, with a specific design that can be recognized by the artificial intelligence of the server. A possible design could be a target disc or other fiducial marker, preferably augmented with a peripheral finder pattern to establish rotational asymmetry. The sticker is manually centered with respect to the damage, providing an explicit mark for the analysis. The dimensions of the sticker, for instance, a 12 cm by 12 cm square, can serve as a size reference for the analyses.

The user then captures a full view of the windshield and a closeup view of the damage from the outside of the windshield, focusing on the sticker. These two images provide comprehensive visual information about the damage and its location relative to the entire windshield. To avoid fraudulent manipulation, a continuous video could be captured instead of separate images, verifying the identity and immobility of the sticker between views.

Once the imagery is captured, it is uploaded from the mobile client to a server equipped with artificial intelligence. The server first analyzes the closeup view to determine the type of damage, distinguishing between crack formation, stone chipping, or various superficial abrasions beyond coverage of physical damage insurance. Depending on the type of damage, the server then analyzes the full view to determine the location of the damage relative to the windshield.

If the damage is classified as stone chipping and located outside the critical area of the windshield, the server may categorize the windshield as repairable. Conversely, if the damage is a crack or is located within a critical area, the server may categorize the windshield as irreparable.

For a more comprehensive assessment, the method can also include the capturing of additional images of the car or its registration document, to identify the car model and apply model-specific criteria in the damage assessment.

Finally, the server sends a detailed report of the damage assessment to the user or any other designated recipient. This report includes the type and location of the damage, and the categorization of the windshield as repairable or irreparable.

### Example

Consider a scenario where a car owner visits a workshop to get the windshield checked due to a nondescript but local damage. The workshop employee applies a 12 cm by 12 cm square sticker, designed as a target disc, on the inside of the windshield, roughly centering it with respect to the perceived defect. Using a smartphone app as outlined above, the employee, now outside the car, captures full views of the car's front (including its license plate), windshield, and a closeup view of the flawed area, causing the phone's camera to focus on the sticker.

The employee also captures a view of the car's registration document and odometer. This imagery is then uploaded to a server equipped with artificial intelligence.

The server begins the assessment by performing a first analysis on the closeup view of the damage to determine its type. Using artificial intelligence, it identifies the damage as stone chipping.

Following this, the server performs a second analysis on the full view of the windshield. Herein, it uses the sticker as a reference point to determine the location of the damage relative to the windshield, further evaluating the orientation of the sticker using the radially asymmetrical fiducial marker.

The server then classifies the location of the damage. If the damage lies within 10 centimeters from the circumference of the windshield or within a vertical segment of 29 centimeters horizontally centered around the car's steering wheel, the location is classified as critical. Otherwise, it is classified as uncritical. In this example, the damage is determined to be in an uncritical area.

Based on these analyses, the server categorizes the windshield as being repairable because the damage is identified as stone chipping and the location is determined as uncritical.

The server also identifies the car's model based on the captured view of the registration document and accesses a database, such as Audatex, to gather additional model-specific information.

The server then examines the image of the car's odometer and uses character recognition to establish the car's mileage. Considering the type and location of the damage, as well as the car's model and mileage, the server advises towards the repair of the windshield.

The summary of this analysis, including the identified model and mileage of the car, assessment of its damage and associated cost, and recommendation for either repair or replacement, are sent by e-mail or via an application programming interface to the repair service provider, insurance, or car holder, providing them with a clear, objective, and comprehensive assessment.

### Industrial Applicability

The invention as disclosed herein finds profound applicability across several industrial domains, primarily in those necessitating accurate, swift, and objective assessment of vehicular windshield damage, such as insurance and automobile repair services.

In the realm of auto insurance, the proposed method simplifies the process of windshield damage assessment. Insurance companies can benefit from the outlined system to automate claims processing, minimizing the requirement for human intervention, and eliminating the likelihood of subjective bias. The present invention enables them to assess damage quickly and accurately, expediting the claims resolution process and thereby enhancing customer satisfaction.

Additionally, the method disclosed herein is notably pertinent to automobile repair workshops. Employing the proposed system can guide the determination of the most appropriate course of action post-damage, be it repair or replacement of the windshield, based on the damage assessment. Such decisive information, provided promptly, allows these entities to optimize their service schedules and workflow, increasing efficiency, and potentially reducing the duration vehicles spend in the workshop.

Furthermore, the invention proves beneficial for car leasing companies, enhancing their ability to manage fleet maintenance more effectively. By leveraging the invention's quick and precise damage assessment, these entities can prioritize repair tasks, aiding in efficient fleet management and reducing downtime.

Considering these utilities, the present invention, encompassing methods, apparatus, computer programs, and data carrier signals, is distinctly suited for industrial application. This invention does not merely streamline the process of windshield damage assessment but presents a means to enhance the operational efficacy of diverse enterprises dealing with automobile maintenance and insurance services. The industrial adaptability of this invention, thus, lies in its capacity to improve the quality, speed, and reliability of services offered within these sectors.

## Claims

1. Method of assessing damage to the windshield of a car,
**characterized in that**
imagery of the car is provided to a server preferably equipped with artificial intelligence,
the server determines a type of the damage, such as crack formation or stone chipping, in a first analysis of the imagery,
depending on the type of the damage, the server determines a location of the damage relative to the windshield in a second analysis of the imagery.

2. Method as per claim 1,
wherein
the imagery is captured using a mobile client, for example, a smartphone app, and uploaded from the client to the server,
the imagery comprises a full view of the windshield and a closeup view of the damage,
the first analysis is based on the closeup view, and
the second analysis is based on the full view.

3. Method as per claim 2,
wherein,
prior to capturing the imagery, the damage is manually tagged with an opaque front-facing adhesive sticker on one side of the windshield, preferably the inside, said sticker bearing a fiducial marker such as a printed target disc, and
the closeup view is captured from the other side of the windshield, preferably the outside, focusing on the sticker, such that the sticker provides a defined image background for the analyses.

4. Method as per claim 3,
wherein,
when being applied, the sticker is being manually centered with respect to the damage such that it marks the location for the second analysis.

5. Method as per claim 3 or 4,
wherein
the sticker has a predetermined shape, for example, square, and predetermined dimensions, for example, 12 centimeters by 12 centimeters, such that the sticker provides a size reference for the analyses.

6. Method as per any of claims 3 to 5,
wherein
the fiducial marker is radially asymmetrical, for example, exhibiting a peripheral finder pattern, such that the sticker, if being applied in a predetermined orientation, provides an orientation reference for the analyses.

7. Method as per any of claims 3 to 6,
wherein
the imagery is captured in a continuous video such that identity and immobility of the sticker between the views are verifiable such as to preclude fraudulent manipulation.

8. Method as per any of the preceding claims,
wherein,
if, throughout the analyses, the damage is classified as stone chipping and the location as uncritical, the server categorizes the windshield as being repairable.

9. Method as per claim 8,
wherein,
in the second analysis, the location is classified as uncritical unless the damage lies within given distance, such as 10 centimeters, from the circumference of the windshield or within a vertical segment of given width, such as 29 centimeters, horizontally centered around the car's steering wheel.

10. Method as per claim 9,
wherein,
to delimit the segment, position of the steering wheel is either established by means of object recognition based on the full view of the windshield or estimated based on its circumference, such as being at quarter width of the windshield.

11. Method as per any of claims 8 to 10,
wherein
the imagery further comprises a full view of the car or a registration document for the car,
the car's model is identified based on the imagery, and
the server assesses the damage based on the identified model, for example, using a pertinent database such as Audatex or SilverDAT.

12. Method as per claim 11,
wherein
the imagery further comprises a view of the car's odometer,
the car's mileage is established by means of character recognition based on the view of the odometer, and
if the windshield has been categorized as being reparable, the server advises towards either repair or replacement of the windshield depending on the milage and assessed damage.

13. Data processing apparatus comprising means for carrying out the method of any of the preceding claims.

14. Computer program comprising instructions which, when the program is executed by a computer, cause the computer to carry out the method of any of the preceding method claims.

15. Data carrier signal carrying the program of the previous claim.
